# EUROPÄISCHE PATENTSCHRIFT

(11) **EP 0 592 786 B1**
(45) Veröffentlichungstag und Bekanntmachung des Hinweises auf die Patenterteilung: **20.11.1996**
(21) Anmeldenummer: 93112846.6
(22) Anmeldetag: 11.08.1993
(51) Int. Cl.: B62J 7/02

(54) **Seitengepäckträgeranordnung für Zweiradfahrzeuge**
Arrangement of lateral luggage carriers for a bicycle
Disposition de portes-bagages latéraux pour bicyclette

(30) Priorität: 26.09.1992 DE 4232403
(43) Veröffentlichungstag der Anmeldung: 20.04.1994
(73) Patentinhaber: ESGE-Marby GmbH + Co. KG., D-33729 Bielefeld (DE)
(72) Erfinder: Spingler, Christian, D-33729 Bielefeld (DE)
(74) Vertreter: Rüger, Rudolf, Dr.-Ing.

(56) Entgegenhaltungen:
- EP-A- 0 343 321
- WO-A-91/13794

## Beschreibung

Die Erfindung betrifft eine Seitengepäckträgeranordnung für Zweiradfahrzeuge.

Aus der Praxis ist ein Hinterradgepäckträger für Fahrräder bekannt, der einen eine Gepäckauflagefläche bildenden Rahmen aufweist, von dem auf jeder Seite des Fahrrades bzw. Hinterrades mehrere Stützschenkel V-förmig konvergierend in Richtung auf das Hintergabelende laufen. Dort sind die Enden der Stützschenkel über ein Klemmstück mit den Hintergabelenden verbunden. Knapp unterhalb des Gepäckträgerrahmens sind die Stützschenkel auf jeder Seite durch eine im Gebrauchszustand horizontal verlaufende Strebe miteinander verbunden, die dort angeschweißt ist. Diese Strebe soll als Halteglied für Seitengepäcktaschen dienen, die an der Strebe mit Haken eingehängt werden. Diese Anbringung der Seitengepäcktaschen hat den Vorteil, auch bei großen Gepäckmengen den Schwerpunkt niedrig zu halten, um durch das Gepäck die Fahrstabilität nicht unnötig zu beeinträchtigen.

Andererseits wird es als unbefriedigend empfunden, daß die lose, seitlich des Hinterradgepäckträgers hängenden Taschen unter ungünstigen Umständen gegen die Streben des Gepäckträgers schlagen können. Außerdem fehlt jegliche Unterstützung der Taschen, weshalb ihr gesamtes Gewicht von den am oberen Ende der Taschen vorgesehenen Haken aufgenommen werden muß.

Ausgehend hiervon ist es Aufgabe der Erfindung, eine Gepäckträgeranordnung für Zweiradfahrzeuge zu schaffen, die eine sicherere Halterung von Gepäckstücken seitlich an dem Fahrrad im Bereich des hinteren Gepäckträgers ermöglicht und im Nichtgebrauchsfalle ohne weiteres abgenommen werden kann.

Diese Aufgabe wird durch die Gepäckträgeranordnung mit den Merkmalen des Anspruches 1 gelöst.

Die WO-A-91 13 794 zeigt einen Seitengepäckhalter für ein Fahrrad mit Haken sowie einstellbaren Einrichtungen z.B. einem Schnürband zum Verbinden des Korbs mit z.B. einem Hinterradgepäcktrager.

Die Verwendung eines zusätzlichen speziellen Seitengepäckhalters eröffnet die Möglichkeit, die Seitengepäcktaschen sicher und fest an dem Hinterradgepäckträger zu halten. Andererseits kann der Seitengepäckhalter mit wenigen Handgriffen abgenommen werden und braucht nicht am Fahrrad zu verbleiben, wenn er nicht benötigt wird. Das Riegelglied läßt sich ohne zusätzliches Werkzeug von Hand betätigen und gewährleistet zusammen mit der Einrichtung zum Verbinden des Seitengepäckhalters mit den Längsstreben eine stabile und klapperfreie Anbringung an dem Gepäckträger. Darüber hinaus brauchen bei der neuen Lösung die Stützschenkel nicht mehr relativ zueinander starr und unbeweglich zu sein, sondern sie können, wie dies in der DE-C-40 20 563 beschrieben ist, winkelmäßig gegeneinander verstellbar bleiben, um den Gepäckträger auf unterschiedliche Rahmengeometrien einstellen zu können. Die Halterung des Seitengepäckhalters ist davon unbeeinflußt, so daß der Seitengepäckhalter bei beliebigen Rahmengeometrien eingesetzt werden, womit die neue Gepäckträgeranordnung, bestehend aus Hinterradgepäckträger und zugehörigem Seitengepäckhalter flexibel verwendbar ist. Darüber hinaus kann der neue Seitengepäckhalter auch jederzeit nachträglich an bestehenden Hinterradgepäckträgern montiert werden. Dazu braucht lediglich an dem entsprechenden Stützschenkel eine Lagereinrichtung mit dem Riegelglied angebracht zu werden.

Die nachträgliche Anbringung der Lagereinrichtung wird besonders einfach, wenn sie eine Klemmeinrichtung aufweist, mit deren Hilfe sie an einem geeigneten Stützschenkel des Gepäckträgers anzubringen ist. Dies kann beispielsweise durch die Verwendung zweier Klemmbacken erfolgen, die mittels einer Vorspanneinrichtung in Gestalt einer oder mehrerer Schrauben miteinander zusammengeschraubt werden.

Bei einer Klemmbefestigung ist der Sitz besonders fest, wenn in den Klemmbacken wenigstens eine Nut enthalten ist, die den Stützschenkel zumindest teilweise umgibt. Vorzugsweise sind in den Klemmbacken zwei Nuten enthalten, die sich in Richtung aufeinander öffnen und in der Kontur an die Außenkontur des Stützschenkels näherungsweise angepaßt sind.

Die Halterung des Riegelgliedes ist sehr einfach, wenn es sich um ein drehbares Riegelglied handelt, weil darüber hinaus in diesem Falle die Verschmutzung vermindert wird, so daß über einen langen Zeitraum eine Leichtgängigkeit gewährleistet werden kann.

Das Riegelglied ist beispielsweise ein Exzenter, der in einem Teil seines Umfangs eine Nut oder Rille enthält, die bei verriegeltem Seitengepäckhalter die Haltestrebe teilweise umfaßt.

Wenn diese Rille oder Nut an jenem Bereich der verriegelten Stellung entspricht, etwa gerade verläuft, ergibt sich eine Sicherung für das Riegelglied, die ein selbsttätiges Öffnen verhindert. Die Haltestrebe an dem Seitengepäckhalter ist elastisch genug, um bei der Betätigung des Riegelgliedes nachzugeben, damit der Exzenter verdreht werden kann.

Die Halterung von Taschen oder anderen Gepäckstücken wird besonders sicher, wenn der Seitengepäckhalter in seinem unteren Bereich eine Gepäckauflagefläche aufweist. Diese Gepäckauflagefläche ist vorzugsweise in Richtung auf das Vorderrad leicht nach unten geneigt und es ist außerdem ein in Fahrtrichtung liegender Anschlag für das Gepäckstück vorgesehen. Das Gepäckstück kann dadurch nicht in Längsrichtung hin- und herrutschen, sondern sitzt fest und schwingungsfrei an dem Fahrrad. Außerdem ermöglicht die untere Auflagefläche ohne zusätzliche Maßnahmen, daß die Gepäcktasche auch bei Schräglagen des Fahrrades nicht seitlich wegschwingt, selbst dann, wenn die Gepäcktasche nur in ihrem oberen Ende an dem Seitengepäckhalter angebracht ist.

Im übrigen sind Weiterbildungen der Erfindung Gegenstand von Unteransprüchen.

In der Zeichnung ist ein Ausführungsbeispiel des Gegenstandes der Erfindung dargestellt. Es zeigen:
- Fig. 1: eine Gepäckträgeranordnung aus einem Hinterradgepäckträger und einem daran montierten Seitengepäckträger, in einer perspektivischen Draufsicht,
- Fig. 2: den Seitengepäckhalter nach Fig. 1, in einer perspektivischen Draufsicht,
- Fig. 3: die Lageeinrichtung und das Riegelglied zur Sicherung des Seitengepäckhalters nach Fig. 1 in einem Längsschnitt längs der Linie III-III nach Fig. 5,
- Fig. 4: die Anordnung nach Fig. 3, geschnitten längs der Linie IV-IV nach Fig. 5 und
- Fig. 5: das Riegelglied zum Sichern des Seitengepäckhalters nach Fig. 2, in einer Seitenansicht.

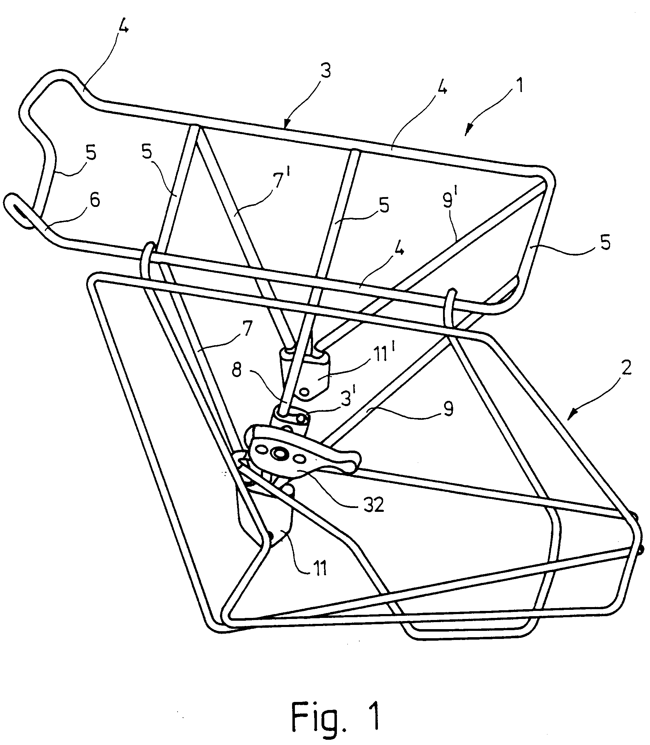

Fig. 1 zeigt eine Gepäckträgeranordnung aus einem Hinterradgepäckträger 1 für ein Fahrrad sowie einen an dem Hinterradgepäckträger 1 montierten Seitengepäckträger 2. Der Hinterradgepäckträger 1 weist einen eine Gepäckauflagefläche bildenden Gepäckträgerrahmen 3 auf, der zwei parallel nebeneinander verlaufende Längsstreben 4 enthält, die durch insgesamt vier Querstreben 5 miteinander verbunden sind. Von diesen Querstreben 5 befinden sich zwei an den Enden der Längsstreben 4, die an dem vorderen Ende jeweils einen nach oben gebogenen Abschnitt 6 bilden, der einen vorderen Anschlag für ein auf dem Gepäckträgerrahmen 3 liegendes Gepäckstück darstellt. Jenseits der beiden Abschnitte 6 sind die Längsstreben 4 durch die am weitesten vorne liegende Querstrebe 5 miteinander verbunden, die gleichzeitig die Anbringung des Hinterradgepäckträgers 1 an einem Sattelrohr eines nicht gezeigten Fahrrades ermöglicht.

Von den beiden im übrigen geraden Längsstreben 4, die sich in Gebrauchsstellung beidseits einer vertikalen Mittelebene des nicht gezeigten Fahrrades erstrecken, gehen zwei Gruppen von Stützschenkeln nach unten. Auf der dem Betrachter zugewandten Seite des Hinterradgepäckträgers 1 sind dies die Stützschenkel 7, 8 und 9, die, wie die Figur erkennen läßt, ausgehend von der Längsstrebe 4 nach unten in Richtung zu dem Hintergabelende des nicht gezeigten Fahrradrahmens konvergieren. In ihrem unteren Bereich sind die sonst geraden Stützschenkel 7, 8 und 9 parallel zueinander abgewinkelt und stecken dort in einem Klemmstück 11, das zur Aufnahme der parallel zueinander abgewinkelten Enden der Stützschenkel 7, 8, 9 zueinander parallele Aufnahmeöffnungen aufweist. In diesem Klemmstück 11 sind die Stützschenkel 7, 8 und 9 verklemmt, und es dient das Klemmstück 11 dazu, die Stützschenkel 7, 8 und 9 mit dem betreffenden Hintergabelende oder Ausfallende zu verbinden.

Auch die vom Betrachter abliegende Längsstrebe 4 ist mit insgesamt drei Stützschenkeln verbunden, die dasselbe Bezugszeichen wie der entsprechende Stützschenkel auf der anderen Seite des Gepäckträgers tragen, wobei jedoch zur Unterscheidung ein Apostroph hinzugefügt ist. Auch die Stützschenkel 7', 8' und 9' sind an ihrem unteren, von der betreffenden Längsstrebe 4 abliegenden Ende parallel zueinander verlaufend abgebogen und stecken mit den abgebogenen Enden in einem entsprechenden zugehörigen Klemmstück 11'; die Mittel zum Verklemmen der Stützschenkel in den Klemmstücken 11, 11' sind nicht weiter veranschaulicht.

Die Längsstreben 4, die Querstreben 5 sowie die Stützschenkel 7, 8,9; 7', 8' und 9' bestehen in bekannter Weise aus gebogenem Runddraht, der an den geeigneten Stellen miteinander verschweißt ist. Dabei können beispielsweise die Stützschenkel 7, 7' und die dazwischen liegende Querstrebe 5 von einem einstückigen Drahtbügel gebildet sein.

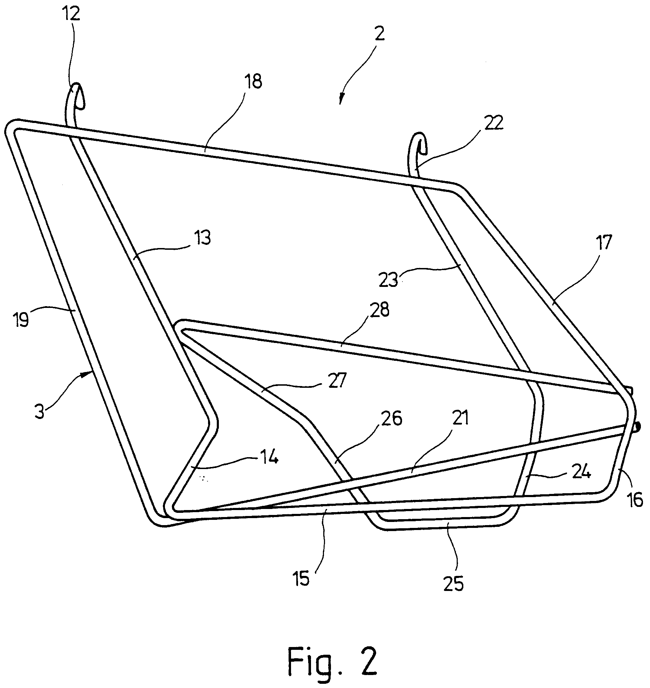

An der dem Betrachter zugewandten Seite des Hinterradgepäckträgers 1 ist ein Seitengepäckträger 2 montiert, der in Fig. 2 einzeln veranschaulicht ist.

Der Seitengepäckträger 2 besteht aus einem Runddrahtgestell 3, das mehrere entsprechend gebogene und miteinander verschweißte Streben aufweist. Insgesamt sind bei dem gezeigten Seitengepäckträger 2 lediglich zwei Runddrähte verwendet. Ein Runddraht beginnt an einem Haken 12, der unterhalb in eine nach unten verlaufende Strebe 13 übergeht. Diese Strebe 13 ist an ihrem unteren Ende in Richtung auf den Betrachter abgebogen, derart, daß eine horizontal verlaufende Strebe 14 entsteht. Am Ende der Strebe 14 ist der Draht in Richtung auf das hintere Ende des Fahrrades gebogen, wodurch eine Strebe 15 gebildet wird, die an ihrem von der Strebe 14 abliegenden Ende in eine Strebe 16 übergeht. Diese Strebe 16 führt von der Strebe 15 in Richtung auf das Hinterrad und liegt in einer Ebene, die auch die Strebe 14 enthält. Die Strebe 16 ist etwas kürzer als die Strebe 14 und geht in eine nach oben führende Strebe 17 über. Die Strebe 17 liegt in einer vertikalen Ebene, in der auch die Strebe 13 enthalten ist.

An die Strebe 17 schließt sich eine Strebe 18 an, die im montierten Zustand des Seitengepäckträgers 2, wie Fig. 1 erkennen läßt, parallel und knapp unterhalb der benachbarten Längsstrebe 4 des Hinterradgepäckträgers 1 sich erstreckt. Sie kreuzt die Strebe 13 und ist an der Übergangsstelle der Strebe 13 zu dem nach unten offenen Haken 12 angeschweißt. Ein kurzes Stück hinter der Verbindungsstelle mit der Strebe 13 ist der die erwähnten Streben 13 bis 18 bildende Draht erneut nach unten abgewinkelt, womit eine Strebe 19 entsteht, die nach unten zu der Strebe 14 führt. Unterhalb der Ecke, an der die beiden Streben 14 und 15 einstückig ineinander übergehen, ist der Runddraht erneut abgebogen, derart, daß eine Strebe 21 entsteht, die diagonal von der Ecke zwischen den Streben 14 und 15 zu der Strebe 16 sich erstreckt, und zwar bis in die Nähe der Ecke, die diese Strebe mit der Strebe 17 bildet. Die Strebe 21 ist von unten her gegen die vorerwähnte Strebe 16, die sie schneidet, angeschweißt.

Der zweite Runddraht beginnt an einem Haken 22, der sich ebenso wie der Haken 12 nach unten öffnet und von diesem im Abstand längs der Strebe 18 angeordnet ist. Von diesem Haken 22 führt eine damit einstückig verbundene Strebe 23 nach unten und ist an ihrem unteren Ende etwa parallel zu den Streben 14 und 16 verlaufen in Richtung auf den Betrachter zu abgewinkelt, wodurch eine Strebe 24 entsteht. Die Ecke zwischen den Streben 23 und 24 liegt ungefähr auf einer Geraden, auf der sich auch die Ecke zwischen den Streben 13 und 14 und die Ecke zwischen den Streben 16 und 17 befindet.

Nach einem kurzen Überstand über die Strebe 15 ist der Draht nach vorne zu umgebogen und bildet eine Strebe 25, die, wie die Figur zeigt, ein Stück weit parallel zu der Strebe 15 verläuft. Etwa in der Mitte der Strebe 15 schließt sich an die Strebe 25 einstückig eine Strebe 26 an, die, abgesehen von der Materialstärke der Streben, in der Ebene der Streben 14, 16 und 24 liegt. Die Strebe 26 verläuft unter einem von 90° verschiedenen Winkel zu der erwähnten Geraden, auf der die Ecken zwischen den Streben 13 und 14, 23 und 24 bzw. 16 und 17 liegen. An dieser Geraden geht die Strebe 26 in eine Strebe 27 über, die nach oben zu der Strebe 13 führt. Etwa auf zwei Drittel der Länge der Strebe 13, gemessen ab der Strebe 14, befindet sich eine scharfe Biegung, an der die Strebe 27 in eine Strebe 28 übergeht, die parallel und im Abstand zu der Strebe 18 verläuft. Die Strebe 28 führt wiederum zurück zu der zwischen den Streben 16 und 17 gebildeten Ecke und ist knapp oberhalb der erwähnten Ecke an der Strebe 17 angeschweißt; alle übrigen Kreuzungsstellen sind, soweit bisher nicht ausdrücklich erwähnt, ebenfalls verschweißt.

Im Gebrauch bilden die Streben 14, 15, 16, 21, 24, 25 und 26 eine Auflagefläche für eine etwa quaderförmige, auf den Seitengepäckträger 2 aufzusetzende Tasche. Diese Auflagefläche verläuft im Gebrauchszustand mit einer ihrer Achsen,die senkrecht auf der vertikalen Mittelebene des Fahrrades steht, horizontal, während die andere Achse, die parallel zu der Längsrichtung des Fahrrades zeigt, geneigt ist, und zwar so, daß die Strebe 16 einen größeren Abstand vom Boden hat als die Strebe 14. Dadurch ist eine auf die Auflagefläche gestellte Tasche bestrebt, nach vorne zu rutschen. Die Strebe 19 bildet demgemäß auch einen vorderen Anschlag, der die Tasche, im Bestreben nach vorne zu rutschen, aufhält. Die Streben 13, 17, 23 und 28 bilden dagegen eine seitliche Anlagefläche, die sich zwischen einer aufgesetzten Tasche und dem Hinterrad befindet. Somit wird eine entsprechend gestaltete eckige Tasche relativ sicher von dem Seitengepäckträger 2 gehalten und durch die unten verlaufenden Streben 14...26 getragen.

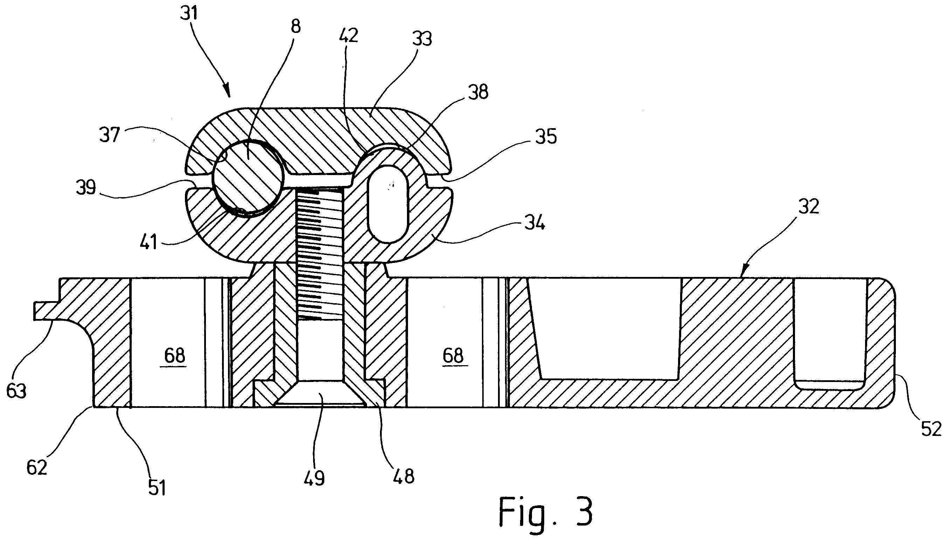

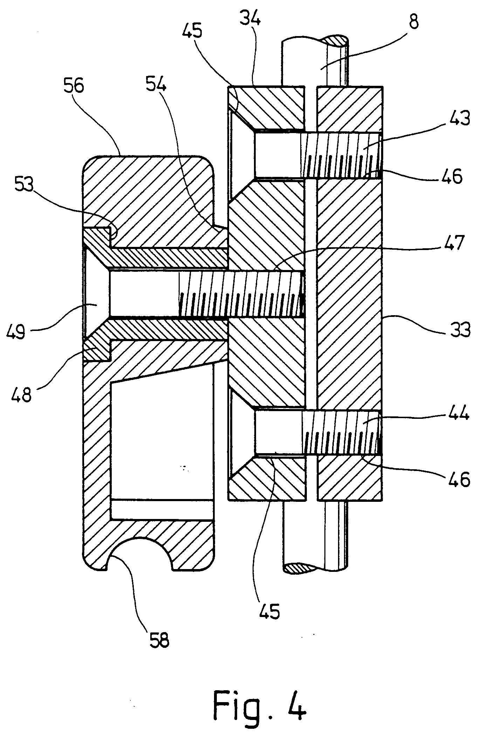

Die Strebe 28 läuft, wie erwähnt, zu der Strebe 18 parallel und stellt eine Haltestrebe dar, um das untere Ende des Seitengepäckträgers 2 an dem Hinterradgepäckträger 1 zu sichern. Zu diesem Zweck ist an dessen mittlerem Stützschenkel 8 eine Lagereinrichtung 31 angeklemmt, mittels derer ein Riegelglied 32 drehbar gelagert ist, das mit der Haltestrebe 28 zusammenwirkt. Die Lagereinrichtung 31 und das Riegelglied 32 sind in den Fig. 3 und 4 in zwei zueinander rechtwinkligen Schnitten dargestellt.

Die Lagereinrichtung 31 besteht aus zwei etwa quaderförmigen Klemmbacken 33 und 34. Die Klemmbacke 33 ist auf ihrer der Klemmbacke 34 gegenüberliegenden planen Fläche 35 mit zwei zueinander parallelen, etwa halbkreisförmigen Nuten 36 und 37 versehen, von denen die Nut 37 der Aufnahme der Strebe 8 dient. Die Klemnbacke 34, die an ihrer der Fläche 35 gegenüberstehenden Fläche 39 mit der Klemmbacke 33 deckungsgleich ist, enthält in der Fläche 39 eine über die Längsrichtung durchgehenden und im Querschnitt ebenfalls etwa halbkreisförmige Nut 41, die im montierten Zustand mit der Nut 37 fluchtet. Die beiden Nuten 37 und 41 ergänzen sich etwa zu einer im wesentlichen zylindrischen Durchgangsöffnung, die der Länge nach durch die Lagereinrichtung 31 hindurchführt und in der, wie gezeigt, der Stützschenkel 8 eingeklemmt ist.

Mit der Nut 38 fluchtet an dem Klemmbacken 34 eine im Querschnitt etwa halbkreisförmige Rippe 42, die zusammen mit der Nut 38 etwa eine Art Scharnier bildet, dessen Scharnierachse zu den Nuten 37 und 41 parallelliegt.

Die Tiefe der Nuten 37 und 41 einerseits und die Abmessungen der Nut 38 relativ zu der Rippe 42 sind so gewählt, daß zwischen den einander gegenüberstehenden, ansonsten planen Flächen 35 und 39 ein kleiner Spalt verbleibt, damit zwischen den Nuten 37 und 41 Stützschenkel 8 mit unterschiedlichem Durchmesser sicher reibschlüssig eingeklemmt werden können. Der Halt wird dabei verbessert, wenn der Querschnitt der beiden Nuten 37 und 41 nicht exakt zylindrisch ist, sondern jede Nut geringfügig in Richtung eines dreieckförmigen Querschnitts verformt ist, damit definierte Anlageverhältnisse zustandekommen, wenn der Stützschenkel 8, wie gezeigt, durchgehend zylindrischen Querschnitt hat.

Die beiden Klemmbacken 33 und 34 werden mittels zweier Senkschrauben 43 und 44 gegeneinander verspannt, wozu der Klemmbacken 34 im Abstand zueinander zwei angesenkte Bohrungen 45 enthält, die mit Gewindebohrungen 46 in dem Klemmbacken 33 fluchten. Die Bohrungen 45 und 46 befinden sich, wie Fig. 4 zeigt, in der Nähe des oberen bzw. des unteren Endes der Klemmbacken 33, 34 und liegen zwischen den Nuten 37, 41 einerseits und der Nut 38 bzw. der Rippe 42 andererseits.

Zwischen den angesenkten Bohrungen 45 für die Senkkopfschrauben 43 befindet sich in dem Klemmbacken 34 eine weitere Gewindebohrung 47, in der ein eine Bundbuchse 48 tragende Senkkopfschraube 49 eingedreht ist. Mit Hilfe der Senkkopfschraube 49 wird die Bundbuchse, deren Bund von dem Klemmbacken 34 abliegt, an dem Klemmbacken 34 drehfest gehalten. Die Bundbuchse 48 bildet eine unmittelbare Lagerfläche für das darauf drehbar gelagerte Riegelglied 32, dessen Drehachse rechtwinklig zu der Achse des Stützschenkels 8 verläuft.

Das Riegelglied 32 ist im wesentlichen ein Exzenter 51, an dem etwa radial bezüglich der durch die Schraube 49 definierten Achse ein Betätigungsgriff 52 einstückig angeformt ist.

Während die Lagereinrichtung 31 mit den Klemmbacken 33 und 34 aus Metall, vorzugsweise aus Aluminium, besteht, ist der Exzenter 51 zusammen mit dem Betätigungsgriff 52 ein gespritztes Kunststofformteil.

Der Exzenter 51 ist etwa eine dicke Scheibe mit einer an die Form der Bundbuchse 48 angepaßten Stufenbohrung 53. In Verlängerung der Stufenbohrung 53 ist der Exzenter 51 mit einem ringförmigen Fortsatz 54 versehen, der gleitend an der planen Außenseite des Klemmbackens 34 anliegt. Der Exzenter 51 ist zwischen dem Bund der Bundbuchse 48 und der Klemmbacke 34 axial gesichert.

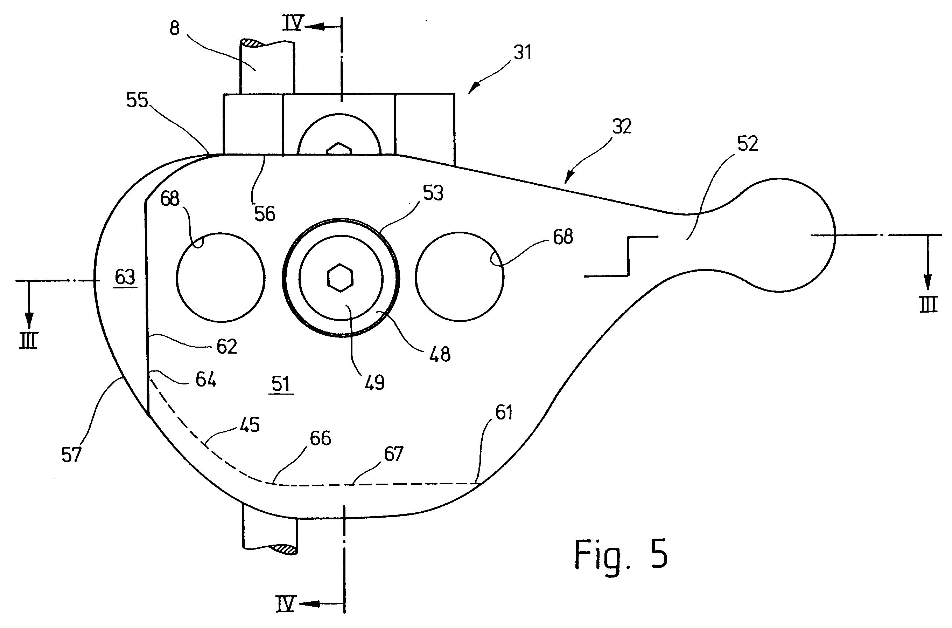

Der etwa scheibenförmige Exzenter 51 weist eine Außenumfangsfläche 55 auf, die gemäß Fig. 5 in einem Bereich 56 etwa gerade verläuft. An ihrem linken Ende, bezogen auf Fig. 5, geht die Außenumfangsfläche 55 in einen bogenförmig gekrümmten Bereich 57 über, wobei auf der Krümmungsinnenseite die Stufenbohrung 53 liegt. Die Erzeugende der Außenfläche bzw. des Bereiches 57 ist eine Gerade, die zu der Achse der Stufenbohrung 53 parallel ist. Der Abschnitt 57 führt, ausgehend von dem Abschnitt 56, etwa um einen Umfangswinkel von ca. 180° um die Stufenbohrung 53 herum, wobei der radiale Abstand von der Achse der Stufenbohrung 53 mit zunehmender Entfernung von dem Abschnitt 56 zunimmt.

In dem Bereich 57 der Außenumfangsfläche 55 ist eine im Querschnitt etwa teilkreisfürmige Nut 58 eingeformt, die bei dem Abschnitt 56 beginnt und, wie Fig. 5 zeigt, bei 61 endet, wo sie die Außenumfangsfläche 57 stirnseitig schneidet.

Dem Betätigungsgriff 52 bezüglich der Achse der Stufenbohrung 53 diametral gegenüberliegend ist bei 62 eine Seitenwand der Nut entfernt, so daß lediglich die der Lagereinrichtung 31 benachbarte Seitenwand 63 in diesem Bereich verbleibt, wie dies Fig. 3 zeigt. Damit beginnt die voll ausgebildete Nut 58 erst im Anschluß an den Bereich 62 bei 64. Von hier ausgehend vergrößert sich der radiale Abstand zu der Achse der Stufenbohrung 53 kontinuierlich, wie dies in Fig. 5 durch eine gestrichelte Linie 65 angedeutet ist, die den Grund der Nut 58 repräsentiert. An einem Punkt 66 geht mit einem leichten Knick die Nut 58 in einen gerade verlaufenden Bereich 67 über, der bis zu dem Ende der Nut 58 bei 61 reicht. Dieser gerade verlaufende Abschnitt 67 liegt radial etwas näher an der Achse der Stufenbohrung 53 als der Punkt 66. Die gesamte Nut 58 liegt in einer Ebene, auf der die Drehachse senkrecht steht.

Im Anschluß an den Punkt 61 an der Unterseite und im Anschluß an den Bereich 56 verjüngt sich der Exzenter 51 flaschenhalsähnlich nach rechts zu dem Betätigungsgriff 52.

Um Zugang zu den beiden Klemmschrauben 43 und 44 zu schaffen, damit diese auch bei aufgesetztem Riegelglied 32 betätigt werden können, sind neben der Stufenbohrung 53 zwei Durchgangsbohrungen 68 angebracht, derart, daß diese Bohrungen 68 in einer Stellung des Riegelgliedes 32 mit den Köpfen der beiden Schrauben 43 und 44 fluchten. Vorzugsweise ist der Durchmesser dieser Durchgangsbohrungen 68 so gewählt, daß die Köpfe der Schrauben 43 und 44 hindurchpassen.

Die Handhabung bzw. Montage der insoweit beschriebenen Seitengepäckträgeranordnung, bestehend aus dem Seitengepäckträger 2 und der Lagereinrichtung 31 samt Riegelglied 32, geschieht wie folgt:

Bei gelösten Schrauben 43 und 44 werden von der Seite her die beiden Klemmbacken 33 und 34 auf den Stützschenkel 8 aufgeschoben,und sodann werden die beiden Schrauben 43 und 44 festgezogen, um die Klemmbacken 33 und 34 reibschlüssig auf dem Stützschenkel 8 festzulegen. Die Höhe und die winkelmäßige Ausrichtung ergibt sich aus der nachfolgenden Funktionsbeschreibung.

Sodann wird der Seitengepäckträger 2 mit den beiden Haken 12 und 22 in die betreffende Längsstrebe 4 eingehängt. Das Riegelglied 32 wird in eine Stellung gedreht, in der der gerade Abschnitt 62, also jener Bereich,in dem die Nut 48 lediglich die rückwärtige Wand 63 aufweist,parallel zu der Haltestrebe 28 ausgerichtet ist. Bei richtiger Höhenjustierung der Lagereinrichtung 31 kann ohne Behinderung der Seitengepäckträger 2, der an der Längsstrebe 4 hängt, so verschwenkt werden, daß die Haltestrebe 28 an der rückwärtigen Wand 63 anliegt. Daraufhin wird das Riegelglied im Uhrzeigersinne geschwenkt, bis die Stellung nach Fig.5 erreicht ist. Hierbei erfaßt die als Fangnut wirkende Nut 58 die Haltestrebe 28, und zwar so, daß wiederum richtige Justierung der Lagereinrichtung 31 vorausgesetzt, kurz bevor der Punkt 66 die Haltestrebe 28 erreicht, der Grund der Nut 58 mit der Haltestrebe 28 in Eingriff kommt und den Seitengepäckträger 2 mit Kraft nach unten zieht, womit die Haken 12 und 22 an der Längsstrebe 4 fest nach unten gezogen werden. Nach überwinden des Punktes 66 kommt der gerade Abschnitt 67 mit der Haltestrebe 28 in Eingriff, wodurch zwar die Spannung etwas nachläßt, weil der radiale Abstand dieses Abschnittes 67 etwas geringer ist als der radiale Abstand im Bereich des Punktes 66, aber noch hoch genug ist, um die gesamte Anordnung unter Vorspannung zu halten. Gleichzeitig sichert die Vorspannung das Riegelglied 32 gegen Rückdrehen, denn um den Punkt 66 zu überwinden,muß eine zusätzliche Kraft aufgebracht werden. Andererseits kann das Riegelglied 32 nicht über die Endlage gemäß Fig. 5 hinausgedreht werden, weil der Punkt 61 einen so großen radialen Abstand von der Achse der Stufenbohrung 53 hat, daß das erforderliche Moment an dem relativ kurzen Betätigungsgriff 52 praktisch nicht aufzubringen ist.

Die Elastizität der Haken 12 und 22 in Verbindung mit der Haltestrebe 28 dient als Vorspanneinrichtung, um den Exzenter 51 in jener Stellung zu halten, in der der Abschnitt 67 der Nut 58 parallel zu der Haltestrebe 28 verläuft. Jedes Verdrehen des Exzenters 51 aus dieser Stellung bedeutet einen zusätzlichen Kraftaufwand.

Die Haltestrebe sitzt formschlüssig gehalten in der Fangnut 58 und der Seitengepäckträger kann nicht um die Längsstrebe 4 pendeln.

Um bei Nichtgebrauch den Seitengepäckträger 2 entfernen zu können, genügt es nun, das Riegelglied 32 aus der in Fig. 5 gezeigten Stellung im Gegenuhrzeigersinn um ca. 90° zu verdrehen (der Abschnitt 67 verläuft im rechten Winkel zu dem Abschnitt 62), damit der Abschnitt 62 mit der Haltestrebe 28 ausgerichtet ist.

Der Seitengepäckträger 2 läßt sich nun ohne weiteres seitlich wegschwenken, bis die Haltestrebe 28 aus dem Bereich des Riegelgliedes 32 herausgekommen ist, damit er nach oben mit seinen Haken 12 und 22 von der Längsstrebe 4 abgehängt werden kann.

Die Lagereinrichtung 31 verbleibt zusammen mit dem Riegelglied 32 an dem Stützschenkel 8, um zu einem späteren Zeitpunkt den Seitengepäckträger 2 wieder montieren zu können.

Es versteht sich, daß es zu dem in Fig.2 gezeigten Seitengepäckträger 2 eine spiegelbildliche Ausführungsform gibt, die bei Bedarf auf der anderen Seite des Hinterradgepäckträgers 1 befestigt werden kann, wozu die Lagereinrichtung 31 und das Riegelglied 32 entweder spiegelsymmetrisch ausgebildet werden können, oder, falls es der Platz zuläßt, genügt es, wenn die gezeigte Ausführungsform nicht mit dem Betätigungsgriff 52 nach hinten, sondern nach vorne weisend an dem Stützschenkel 8', der durch die Querstrebe 5 verdeckt ist, angebracht wird. Aus übersichtlichkeitsgründen ist an dem Hinterradgepäckträger 1 lediglich ein Seitengepäckträger 2 montiert veranschaulicht.

## Patentansprüche

1. Seitengepäckträgeranordnung für ein Zweiradfahrzeug, das einen Hinterradgepäckträger (1) mit einem eine Gepäckauflagefläche bildenden Gepäckträgerrahmen (3) aufweist, der mit wenigstens zwei im Abstand voneinander verlaufenden Längsstreben (4) versehen ist, von denen jede über wenigstens einen von der jeweiligen Längsstrebe ausgehenden Stützschenkel (7, 8, 9) gegenüber Hintergabelenden des Zweirades abgestützt ist,
mit einem Gestell (2), das Einrichtungen (12, 22) zum Verbinden des Gestells (2) mit einer der Längsstreben (4) sowie im Abstand zu dieser Einrichtung (12, 22) eine Haltestrebe (28) aufweist, und
mit einer an dem dem Gestell (2) benachbarten Stützschenkel (8) vorgesehenen Lagereinrichtung (31), mittels derer ein Riegelglied (32) an dem Stützschenkel (8) beweglich gelagert ist, das zwichen einer Lösestellung, in der die Haltestrebe (28) frei gegenüber dem Stützschenkel bewegbar ist, und einer Verriegelungsstellung hin- und herbewegbar ist, in der die Haltestrebe (28) zumindest in einer Richtung gegenüber dem betreffenden Stützschenkel (8) festgelegt ist.

2. Anordnung nach Anspruch 1, dadurch gekennzeichnet, daß die Lagereinrichtung (31) Klemmeinrichtungen (33, 34) zum Anklemmen an den jeweiligen Stützschenkel (8) aufweist.

3. Anordnung nach Anspruch 1, dadurch gekennzeichnet, daß die Lagereinrichtung (31) zwei Klemmbacken (33, 34) aufweist, die mittels einer Vorspanneinrichtung (43, 44) in Richtung aufeinander zu vorspannbar sind.

4. Anordnung nach Anspruch 3, dadurch gekennzeichnet, daß die Vorspanneinrichtung von wenigstens einer Schraube (43, 44) gebildet ist, die durch eine Bohrung (45) in einer der beiden Klemmbacken (34) hindurchführt und vorzugsweise in einer Gewindebohrung (46) der anderen Klemmbacke (33) eingeschraubt ist.

5. Anordnung nach Anspruch 3, dadurch gekennzeichnet, daß die Klemmbacken (33, 34) zur Aufnahme des Stützschenkels (8) zwei aufeinander ausgerichtete Nuten (37, 41) enthalten, die sich in Richtung aufeinander zu öffnen.

6. Anordnung nach Anspruch 5, dadurch gekennzeichnet, daß die Kontur der Nut (37, 41) an die Außenkontur des Stützschenkels (8) angepaßt ist.

7. Anordnung nach Anspruch 1, dadurch gekennzeichnet, daß das Riegelglied (32) drehbar gelagert ist und daß die Drehachse des Riegelgliedes (32) rechtwinklig zu der Haltestrebe (8) verläuft.

8. Anordnung nach Anspruch 7, dadurch gekennzeichnet, daß das Riegelglied (32) von einem drehbar gelagerten Exzenter (51) gebildet ist, dessen Drehachse rechtwinklig zu der Haltestrebe (8) ausgerichtet ist.

9. Anordnung nach Anspruch 8, dadurch gekennzeichnet, daß der Exzenter (51) eine Außenfläche aufweist, und daß in der Außenfläche eine die Haltestrebe (28) im verriegelten Zustand teilweise aufnehmende Fangnut (58) enthalten ist.

10. Anordnung nach Anspruch 9, dadurch gekennzeichnet, daß die Fangnut (58) einen Abschnitt (67) mit gerader Längserstreckung aufweist.

11. Anordnung nach Anspruch 9, dadurch gekennzeichnet, daß die Fangnut (58) in ihrer Kontur an die Außenkontur der Haltestrebe (28) angepaßt ist.

12. Anordnung nach Anspruch 11, dadurch gekennzeichnet, daß die Fangnut (58) im Querschnitt gesehen eine teilkreisförmige Gestalt hat.

13. Anordnung nach Anspruch 8, dadurch gekennzeichnet, daß der Exzenter (51) mit einem radial bzw. tangential bezüglich der Drehachse verlaufenden Betätigungsgriff (52) versehen ist.

14. Anordnung nach Anspruch 9, dadurch gekennzeichnet, daß die Fangnut (58) lediglich ein Stück weit in Umfangsrichtung des Exzenters (51) verläuft, wobei die Länge in Umfangsrichtung größer ist als der Abschnitt (67) der Fangnut (58), der in der verriegelten Stellung mit der Haltestrebe (28) in Eingriff ist.

15. Anordnung nach Anspruch 1, dadurch gekennzeichnet, daß das Gestell (2) an seinem in der Gebrauchsstellung oberen Ende zwei Hakenglieder (12, 22) aufweist, mit denen das Gestell (2) an der betreffenden Längsstrebe (4) des Gepäckträgerrahmens (3) einzuhängen ist.

16. Anordnung nach Anspruch 15, dadurch gekennzeichnet, daß das Gestell (2) wenigstens zwei Längsstreben (13, 23) aufweist, die in der Gebrauchsstellung aus dem Bereich der Längsstrebe (4) des Gepäckträgerrahmens (3) in Richtung auf die Haltestrecke (28) führen.

17. Anordnung nach Anspruch 1, dadurch gekennzeichnet, daß das Gestell (2) bei der Gebrauchsstellung an seinem unteren Ende eine etwa horizontal verlaufende Gepäckauflagefläche aufweist.

18. Anordnung nach Anspruch 17, dadurch gekennzeichnet, daß die Gepäckauflagefläche des Gestells (2) in Richtung auf das Vorderrad des Zweiradfahrzeuges schräg nach unten geneigt ist.

19. Anordnung nach Anspruch 1, dadurch gekennzeichnet, daß an dem Gestell (2) ein in Fahrtrichtung nach vorne liegender Anschlag (19) für das Gepäckstück vorgesehen ist.

20. Anordnung nach Anspruch 1 , dadurch gekennzeichnet, daß das Gestell (2) aus Rundmaterial, vorzugsweise Runddraht, besteht.

## Claims

1. Arrangement for lateral luggage carriers for a bicycle, which has a rear wheel luggage carrier (1) with a luggage carrier frame (3) forming a luggage support surface and fitted with at least two longitudinal struts (4) extending at a distance from one another, each of which being supported in relation to the rear stays of the bicycle via at least one support leg (7, 8, 9) extending from the respective longitudinal struts,
with a support frame (2), which has elements (12, 22) for connecting the support frame (2) to one of the longitudinal struts (4) as well as a retaining strut (28) spaced from this element (12, 22), and
with a mounting means (31) provided on the support leg (8) adjacent to the support frame (2) and by means of which a locking bar (32) is movably mounted on the support leg (8) which may be moved back and forth between a release position, in which the retaining strut (28) is freely movable relative to the support leg, and a locking position, in which the retaining strut (28) is fixed at least in one direction relative to the respective support leg (8).

2. Arrangement according to Claim 1, characterised in that the mounting means (31) has clamping means (33, 34) for clamping onto the respective support leg (8).

3. Arrangement according to Claim 1, characterised in that the mounting means (31) has two clamping jaws (33, 34) which may be pre-stressed towards one another by means of a pre-stressing means (43, 44).

4. Arrangement according to Claim 3, characterised in that the pre-stressing means is formed by at least one screw (43, 44), which is directed through a hole (45) in one of the two clamping jaws (34) and is preferably screwed into a threaded hole (46) of the other clamping jaw (33).

5. Arrangement according to Claim 3, characterised in that to receive the support leg (8), the clamping jaws (33, 34) include two-aligned grooves (37, 41) which open towards one another.

6. Arrangement according to Claim 5, characterised in that the contour of the groove (37, 41) is adapted to the outer contour of the support leg (8).

7. Arrangement according to Claim 1, characterised in that the locking bar (32) is rotatably mounted, and that the rotational axis of the locking bar (32) runs at right angles to the retaining strut (28).

8. Arrangement according to Claim 7, characterised in that the locking bar (32) is formed by a rotatably mounted cam (51), the rotational axis of which is aligned at right angles to the retaining strut (28).

9. Arrangement according to Claim 8, characterised in that the cam (51) has an outer surface, and that an intercepting groove, (58) is contained in the outer surface to partially receive the retaining strut (28) in locked state.

10. Arrangement according to Claim 9, characterised in that the intercepting groove (58) has a section (67) with a straight longitudinal extension.

11. Arrangement according to Claim 9, characterised in that the intercepting groove (58) is adapted in contour to the outer contour of the retaining strut (28).

12. Arrangement according to Claim 11, characterised in that the intercepting groove (58) has the shape of a sector of a circle when viewed in cross-section.

13. Arrangement according to Claim 8, characterised in that the cam (51) is fitted with an operating handle (52) running radially or tangentially relative to the rotational axis.

14. Arrangement according to Claim 9, characterised in that the intercepting groove (58) extends only a short way in the peripheral direction of the cam (51), whereby the length in peripheral direction is greater than the section (67) of the intercepting groove (58), which engages with the retaining strut (28) in the locked position.

15. Arrangement according to Claim 1, characterised in that the support frame (2) has two hook elements (12, 22) on its upper end in the position of use, by which the support frame (2) may be suspended on the respective longitudinal strut (4) of the luggage carrier frame (3).

16. Arrangement according to Claim 15, characterised in that the support frame (2) has at least two longitudinal struts (13, 23), which in the position of use extend out of the region of the longitudinal strut (4) of the luggage carrier frame (3) towards the retaining strut (28).

17. Arrangement according to Claim 1, characterised in that in the position of use the support frame (2) has an approximately horizontally extending luggage support surface at its lower end.

18. Arrangement according to Claim 17, characterised in that the luggage support surface of the support frame (2) is inclined obliquely downwards towards the front wheel of the bicycle.

19. Arrangement according to Claim 1, characterised in that a stop (19) located at the front in the direction of travel is provided on the support frame (2) for the item of luggage.

20. Arrangement according to Claim 1, characterised in that the support frame (2) is made of round stock, preferably round wire.

## Revendications

1. Ensemble porte-bagages latéral pour un véhicule à deux roues, comportant un porte-bagages arrière (1) avec un cadre (3) de porte-bagages qui constitue la surface de pose des bagages et comprend au moins deux barres longitudinales (4) espacées l'une de l'autre qui prennent appui chacune sur les pattes de fourche arrière du véhicule à deux roues par au moins une jambe (7, 8, 9) partant de la barre longitudinale concernée, une ossature (2) qui présente des moyens (12, 22) pour relier ladite ossature (2) à l'une des barres longitudinales (4) ainsi qu'une barre de fixation (28) disposée à distance des moyens (12, 22) et
un dispositif support (31) prévu sur la jambe d'appui (8) voisine de l'ossature (2), à l'aide duquel un organe de verrouillage (32) est monté mobile sur la jambe d'appui (8), lequel organe de verrouillage peut être déplacé entre une position non verrouillée dans laquelle la barre de fixation (28) est libre par rapport à la jambe d'appui et une position verrouillée dans la quelle la barre de fixation (28) est immobilisée dans une direction au moins par rapport à la jambe d'appui (8) concernée.

2. Ensemble selon la revendication 1, caractérisé par le fait que le dispositif support (31) présente des moyens de serrage (33, 34) pour assurer la fixation par serrage sur la jambe d'appui (8) concernée.

3. Ensemble selon la revendication 1, caractérisé par le fait que le dispositif support (31) présente deux mâchoires de serrage (33, 34) qui peuvent être rapprochées l'un de l'autre à l'aide d'un dispositif de serrage (43, 44).

4. Ensemble selon la revendication 3, caractérisé par le fait que le dispositif de serrage est formé d'au moins une vis (43, 44) qui pénètre dans un trou (45) dans l'une des deux mâchoires de serrage (34) et est vissée de préférence dans un trou (46) taraudé dans l'autre mâchoire de serrage (33).

5. Ensemble selon la revendication 3, caractérisé par le fait que les mâchoires de serrage (33, 34) comportent deux rainures (37, 41) tournées l'une vers l'autre, ouvertes en direction l'une de l'autre, destinées à recevoir la jambe d'appui (8).

6. Ensemble selon la revendication 5, caractérisé par le fait que la forme de la rainure (37, 41) est adaptée à la forme extérieure de la jambe d'appui (8).

7. Ensemble selon la revendication 1, caractérisé par le fait que l'organe de verrouillage (32) est monté tournant et que l'axe de rotation de l'organe de verrouillage (32) est perpendiculaire à la jambe d'appui (8).

8. Ensemble selon la revendication 7, caractérisé par le fait que l'organe de verrouillage (32) est formé d'un excentrique (51) monté tournant, dont l'axe de rotation est perpendiculaire à la barre de fixation (28).

9. Ensemble selon la revendication 8, caractérisé par le fait que l'excentrique (51) comporte une surface extérieure et qu'une rainure de blocage (58) qui reçoit partiellement la barre de fixation (28) en position verrouillée est prévue dans la surface extérieure.

10. Ensemble selon la revendication 9, caractérisé par le fait que la rainure de blocage (58) comporte un tronçon (67) rectiligne qui s'étend dans la direction longitudinale.

11. Ensemble selon la revendication 9, caractérisé par le fait que la rainure de blocage (58) a une forme adaptée à la forme de la barre de fixation (28).

12. Ensemble selon la revendication 11, caractérisé par le fait que la rainure de blocage (58) a, vu en coupe transversale, une section en forme de partie de cercle.

13. Ensemble selon la revendication 8, caractérisé par le fait que l'excentrique (51) est pourvu d'une poignée d'actionnement (52) qui s'étend radialement ou tangentiellement par rapport à l'axe de rotation.

14. Ensemble selon la revendication 9, caractérisé par le fait que la rainure de blocage (58) s'étend seulement sur une certaine longueur dans la direction périphérique de l'excentrique (51), la longueur dans la direction périphérique étant supérieure au tronçon (67) de la rainure de blocage (58) qui est en prise avec la barre de fixation (28) en position verrouillée.

15. Ensemble selon la revendication 1, caractérisé par le fait que l'ossature (2) présente à son extrémité supérieure dans la position d'utilisation, deux éléments (12, 22) en forme de crochets, au moyen desquels (2) peut être suspendue à la barre longitudinale (4) correspondante du cadre (3) de porte-bagages.

16. Ensemble selon la revendication 15, caractérisé par le fait que l'ossature (2) présente au moins deux barres longitudinales (13, 23) qui, dans la position d'utilisation, mènent de la région des barres longitudinales (4) du cadre (3) de porte-bagages en direction de la barre de fixation (28).

17. Ensemble selon la revendication 1, caractérisé par le fait que l'ossature (2) dans la position d'utilisation présente à son extrémité inférieure une surface de pose des bagages sensiblement horizontale.

18. Ensemble selon la revendication 17, caractérisé par le fait que la surface de pose des bagages de l'ossature (2) est inclinée vers le bas en direction de la roue avant du véhicule à deux roues.

19. Ensemble selon la revendication 1, caractérisé par le fait qu'une butée (19) pour le bagage est prévue sur l'ossature (2), à l'avant, vu dans la direction de déplacement.

20. Ensemble selon la revendication 1, caractérisé par le fait que l'ossature (2) est réalisée en un matériau rond, de préférence en fil rond.
